# EUROPEAN PATENT APPLICATION

(11) **EP 2 373 008 A2**
(43) Date of publication of application: **05.10.2011**
(21) Application number: 11153555.5
(22) Date of filing: 07.02.2011
(51) Int. Cl.: H04N 5/50

(54) **Video receiving apparatus and video receiving method**

(30) Priority: 30.03.2010 JP 2010079839
(71) Applicant: Kabushiki Kaisha Toshiba, Tokyo 105-8001 (JP)
(72) Inventor: Yokochi, Katsuhiko, Tokyo 105-8001 (JP)
(74) Representative: Henkel, Breuer & Partner

(57) **Abstract**

According to one embodiment, a video receiving apparatus includes: a transmitter configured to transmit place information input by a user to an external server; a receiver configured to receive channel list setting information based on the place information from the external server; a scanner configured to scan receivable channels among channels represented by the channel list setting information; and a listing unit configured to list information representing the receivable channels into a channel list.

## Description

### BACKGROUND

### 1. Technical Field

The present invention relates to a video receiving apparatus and, more particularly, to a method using a channel list database.

### 2. Background Art

In a video receiving apparatus, a user interface has been devised in the selection of a channel. For example, Patent Document 1 describes that the structure of a user interface changes therein, that information therefor is acquired from actual broadcast waves or the Internet, and that for example, when there are channels 0 to 999, the channels are classified by category to enable the hierarchical selection of the channels.

The Patent Document 1 describes the classification of the channels as an example of changing the user interface. However, it is demanded to provide convenient viewing environment by narrowing down many channels before processing such as the classification of the channels. The expression "viewing environment" designates capabilities, such as channel lists, which can be set by individual users and used in a television-apparatus.

### BRIEF DESCRIPTION OF THE DRAWINGS

A general configuration that implements the various feature of embodiments will be described with reference to the drawings. The drawings and the associated descriptions are provided to illustrate embodiments and not to limit the scope of the embodiments.
FIG. 1 is a diagram illustrating the configuration of a system according to an embodiment of this invention;
FIG. 2 is a diagram illustrating the configuration of a system according to another embodiment;
FIG. 3 is a diagram illustrating an example of user input information according to an embodiment;
FIG. 4 is a diagram illustrating an example of utilization of storage media according to another embodiment;
FIG. 5 is a diagram illustrating the generation of a channel list used in an embodiment;
FIG. 6 is a diagram illustrating channel list setting information in the case of updating channel list setting information according to an embodiment;
FIG. 7 is a diagram illustrating a channel list in the case of updating channel list setting information according to an embodiment; and
FIG. 8 is a block diagram illustrating the detailed configuration of information recording and reproducing apparatus according to an embodiment.

### DETAILED DESCRIPTION

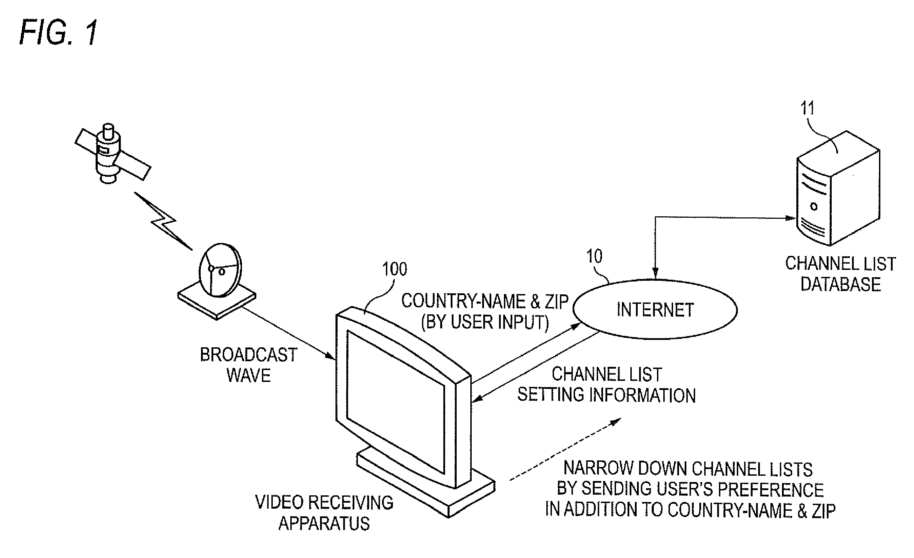

Embodiments according to the invention are described hereinafter with reference to FIGS. 1 to 8.

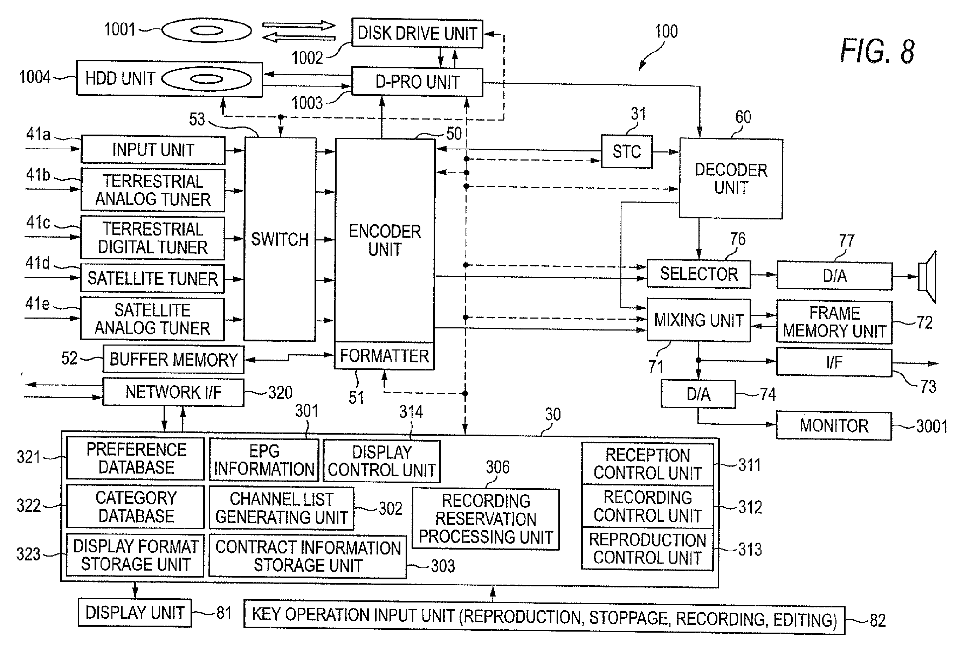

FIG. 8 is a block diagram illustrating the configuration of an information recording and reproducing apparatus 100 according to an embodiment of a video receiving apparatus according to this invention.

FIG. 8 illustrates the information recording and reproducing apparatus 100 as an apparatus that can handle both of an optical disk, such as a digital versatile disk (DVD), and a hard disk as recording media. However, the hard disk or the optical disk such as a DVD can be replaced with, e.g., a recording medium configured by a semiconductor memory. As shown in FIG. 8, blocks are roughly grouped into a group of major blocks of a recording unit, which are shown at the central part and an upper left-side part of FIG. 8, and a group of major blocks of a reproducing unit, which are shown at an upper right-side part of FIG. 8.

The information recording and reproducing apparatus 100 illustrated in FIG. 8 includes two types of disk drive units that are a data-disk drive unit 1002 and a hard-disk drive unit 1004. The data-disk drive unit 1002 rotates an optical disk 1001 and performs read/write of information. The data-disk drive unit 1002 includes a rotation control system for an optical disk 1001, a laser drive system, and an optical system. A hard-disk drive unit 1004 drives a hard disk.

A data processor (D-PRO) unit 1003 can supply recording data to the data-disk drive unit 1002 and the hard-disk drive unit 1004. The data processor unit 1003 can receive reproduced signals. The data processor unit 1003 handles data in recording-units or reproducing-units. The data processor unit 1003 includes a buffer circuit, a modulation/demodulation circuit, an error correction unit and the like.

The information recording and reproducing apparatus 100 includes an encoder unit 50 configuring a recording-side part, a decoder unit 60 configuring a reproducing-side part, and a microcomputer block 30 controlling an operation of an apparatus body, as main components. The encoder unit 50 includes a transport stream processing unit and a plurality of encoders.

The encoder unit 50 basically includes an audio/video analog/digital converter for digitalizing input analog video signals and analog audio signals, a video encoder, and an audio encoder. In addition, the encoder unit 50 includes a sub-video encoder.

An encoded output of the encoder unit 50 is converted into data of a predetermined DVD format by a formatter 51 that includes a buffer memory 52. Then, the converted data is supplied to the above data processor unit 1003.

Sometimes, a packet elementary stream extracted from a transport stream is recorded directly in a hard disk of the hard-disk drive unit 1004 from the encoder unit 50.

External analog video signals and external analog audio signals from an audio-visual (AV) input unit 41a can be input to the encoder unit 50 via a switch 53. Signals received from a terrestrial wave analog tuner 41b, a terrestrial wave digital tuner 41c, a satellite broadcasting-satellite/communication-satellite (BS/CS) tuner 41d, and a satellite analog tuner 41e can selectively be input to the encoder unit 50.

When a plurality of encoders are utilized by the encoder unit 50, a program received by the terrestrial wave digital tuner 41c is recorded in the hard-disk drive unit 1004. Simultaneously, a program received by the satellite BS/CS tuner 41d can be viewed.

When a compressed digital video-data signal and a compressed digital audio-data signal are directly input to the encoder unit 50, the compressed digital video signal and the compressed digital audio signal can be supplied to the formatter 51. In addition, the encoder unit 50 can directly supply, to a video (V) mixing section 71 and an audio selector 76, the digital video signal and audio signal, which have been subjected to analog-to-digital conversion.

A digital video signal is converted in a Moving Picture Experts Group (MPEG) video encoder included in the encoder unit 50 into a digital video signal compressed at a variable bit-rate based on the MPEG2 or MPEG1 standard.

Digital audio signals are converted into a digital audio signal compressed at a fixed bit-rate based on the MPEG or audio code number 3 (AC-3) standard or into a digital audio signal obtained by linear pulse code modulation (PCM).

When a sub-video signal is input from the AV input unit 41a (e.g., signals from a DVD video player having an independent output terminal for sub-video signals) or when DVD video signals having such a data configuration are broadcast and received by one of television (TV) tuner units 41b to 41e, the sub-video signals in the DVD video signals are encoded (by run-length encoding) by the sub-video encoder to obtain bitmaps of sub-images.

Encoded digital video signals, digital audio signals and sub-video data signals are changed by the formatter 51 to packs, such as a video pack, an audio pack and a sub-video pack. Then, these packs are gathered together and converted to data of the following format, i.e., that defined by the DVD-Video standard (DVD-Video format) or that defined by the DVD-Recording standard (DVD-VR format). The formatter 51 utilizes the buffer memory 52 during the above conversion processing.

The information recording and reproducing apparatus 100 can supply the information formatted by the formatter 51 (video-packs, audio-packs and sub-video data packs) and generated management information to the hard-disk drive unit 1004 or the data-disk drive unit 1002 via the data processor unit 1003 and record the supplied information on the hard disk or the optical disk 1001.

The information recording and reproducing apparatus 100 can also record, on the optical disk 1001 or the hard disk, the information recorded on the hard disk or the optical disk 1001 via the data processor unit 1003 or the data-disk drive unit 1002.

In addition, the information recording and reproducing apparatus 100 can execute editing processes of partly deleting video-objects respectively representing a plurality of programs, which are recorded on the hard disk or the optical disk 1001, and coupling the video-objects with those representing different programs recorded on the hard disk or the optical disk 1001.

The above microcomputer block 30 includes a micro-processing unit (MPU) or a central processing unit (CPU) and a read-only memory (ROM) to which a control program or the like is written, and a random access memory (RAM) for providing a work area needed to execute a program.

The microcomputer block 30 can be connected to an external network via a network interface 320. Consequently, the microcomputer block 30 can take in, from an external server 11, channel list setting information that is described below.

In addition, the MPU of the microcomputer block 30 performs various processes of detecting defective locations and unrecorded areas, setting video information recording positions, recording data of the universal disk format (UDF), and setting AV addresses, using the RAM as a work area according to the control program stored in the ROM.

The microcomputer block 30 includes information processing units necessary for supervisingly controlling the blocks of the apparatus. The information processing units include a work RAM, a directory detecting unit, a video manager (VMG) information (overall video management information) generating unit, a packet header processing unit, a sequence header processing unit. The microcomputer block 30 also has a video recording time management information control unit for controlling management information during video recording processing, and an editing time management information control unit for controlling management information during execution of editing processing.

In addition, as described above, the microcomputer block 30 includes an electronic program guide (EPG) information processing unit 301, a channel list generating unit 302, and a contract information storage unit 303. The microcomputer block 30 also includes a display control unit 314 as a graphic user interface to be used when the above operations are performed. The microcomputer block 30 also includes a reception control unit 311 for controlling the tuner and the like based on recording reservation information, a recording control unit 312 for recording a program, and a reproduction control unit 313 for reproducing a recorded program.

In addition, the microcomputer block 30 includes a preference database 321, a category database 322, and a display format storage unit 323, which are used to store attribute information for indicating a channel list display to be described below.

Among results of processing performed by the MPU, those to be notified to a user are displayed in the display unit 81 of the information recording and reproducing apparatus 100. Alternatively, those are indicated on the screen of a monitor 3001 as an on-screen display (OSD).

The microcomputer block 30 also has a key operation input unit 82 for giving operation signals necessary for operating the information recording and reproducing apparatus 100. The key operation input unit 82 corresponds to, e.g., operation switches arranged on the main body of the information recording and reproducing apparatus 100 or to a remote controller or the like. Alternatively, the key operation input unit 82 can be a personal computer connected to the information recording and reproducing apparatus 100 using means, such as wired communication, wireless communication, optical communication, or infrared communication. In any mode, a user can record the input video/audio signals and reproduce and edit any of the recorded contents by operating the key operation input operation 82.

The microcomputer block 30 can control the data-disk drive unit 1002, the hard-disk drive unit 1004, the data processor unit 1003, the encoder unit 50 and/or the decoder unit 60 at timings based on time data sent from a system time clock (STC) 31. Although recording and reproducing operations are normally performed in synchronization with a time clock sent from the STC 31, other processing operations can be performed at timings determined independent of the STC 31.

The decoder unit 60 includes a separator for separating each pack from signals representing data of the DVD format having a pack structure, a memory to be used for separating a pack and performing other signal processing, a video (V) decoder for decoding main video data (the contents of video packs) separated by the separator, a sub-picture (SP) decoder for decoding sub-video data (the contents of sub-video packs) separated by the separator, and an audio (A) decoder for decoding the audio data (the contents of audio packs) separated by the separator.

The decoder unit 60 also has a video processor for appropriately combining a decoded main video-image with a decoded sub-video-image such as a menu, a highlight button and subtitles by superimposing the sub-video-image on the main-video-image, and for outputting the combined image.

Output video signals of the decoder unit 60 are input to the video mixing unit 71. The video mixing unit 71 performs, e.g., combining text data with one another. A line for directly taking in signals from each of the TV tuners 41b to 41e and the AV input unit 41a is connected to the video mixing unit 71.

A frame memory unit 72 to be used as a buffer is connected to the video mixing unit 71. When an output of the video mixing unit 71 is an analog one, the output is sent out to the outside via an interface (I/F) 73. On the other hand, when the output of the video mixing unit is digital one, the output is sent to the outside via a digital-to-analog (D/A) converter 74.

An output audio signal of the decoder unit 60 is subjected to digital-to-analog (D/A) conversion by a digital-to-analog (D/A) converter 77 via a selector 76. Then, the resultant signal is output to an external apparatus. The selector 76 is controlled according to a select signal from the microcomputer block 30. Consequently, the selector 76 can directly select a signal passing through the encoder unit 50 when directly monitoring digital signals sent from the TV tuner units 41b to 41e and the AV input unit 41a.

The formatter 51 of the encoder unit 50 generates segmentation information and periodically sends the generated segmentation information to the MPU of the microcomputer block 30 during recording (such as information on a group of pictures (GOP) head interrupt time). The segmentation information includes the number of packs of a video object unit (VOBU), the end address of the intra (I) picture from the head of the VOBU, and the playback time of the VOBU.

Simultaneously, information from an aspect ratio information processing unit is sent to the MPU. Then, the MPU generates video object (VOB) stream information (STI). The STI contains resolution data, aspect data and the like. When performing playback, the decoder unit 60 performs initialization based on this information.

In order to continue playback without interruption while accessing (seeking) data, the information recording and reproducing apparatus 100 determines a minimum continuous information unit (size). The unit is referred to as a contiguous data area (CDA). A CDA size is a multiple of an error correcting code (ECC) block (16 sectors). In a file system, information is recorded in units of CDA.

The data processor unit 1003 receives data from the formatter 51 of the encoder unit 50 in units of VOBU, and supplies data to the disk drive unit 1002 or the hard-disk drive unit 1004 in units of CDA.

The MPU of the microcomputer block 30 generates management information necessary for reproducing recorded data. When the MPU recognizes a command to end recording of data, the MPU transmits the generated management information to the data processor unit 1003. Consequently, the management information is recorded on the optical disk. Accordingly, while encoding is performed, the MPU of the microcomputer block 30 receives information (e.g., the segmentation information) from the encoder unit 50 in units of data-units.

At the start of recording, the MPU of the microcomputer block 30 recognizes the management information (file system) read from the optical disk 1001 or the hard disk. The MPU also recognizes an unrecorded area of each disk and causes the data processor unit 1003 to set a data recording area on the disk.

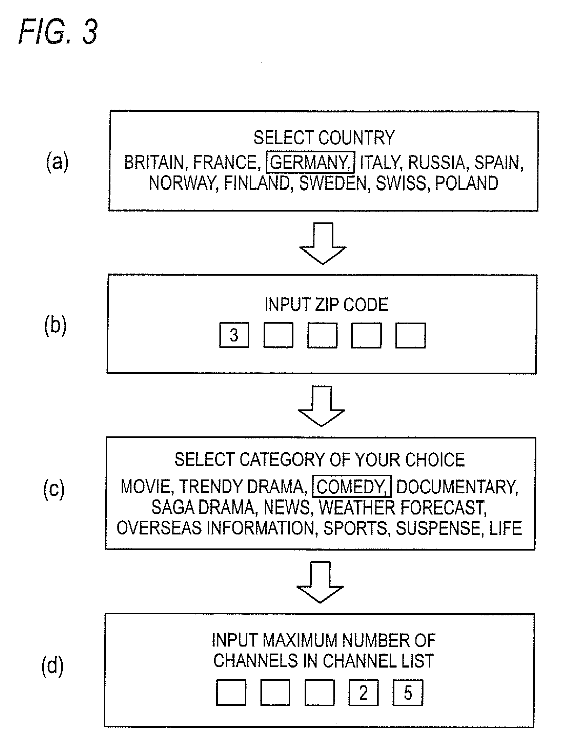

When a user inputs a category, as illustrated in FIG. 3, which will be described below, information corresponding to the category is assumed to be stored in a preference database 321 or a category database 322, as needed.

FIG. 1 is a diagram illustrating the configuration of a video receiving apparatus according to the embodiment when the apparatus is connected directly to the Internet.

The information recording and reproducing apparatus 100 is connected to a server 11 via the Internet 10. FIG. 1 illustrates a configuration in which the video receiving apparatus accesses, via the Internet 10, a channel list database provided in the server 11 by a channel list setting information purveyor, such as a maker of the information recording and reproducing apparatus 100.

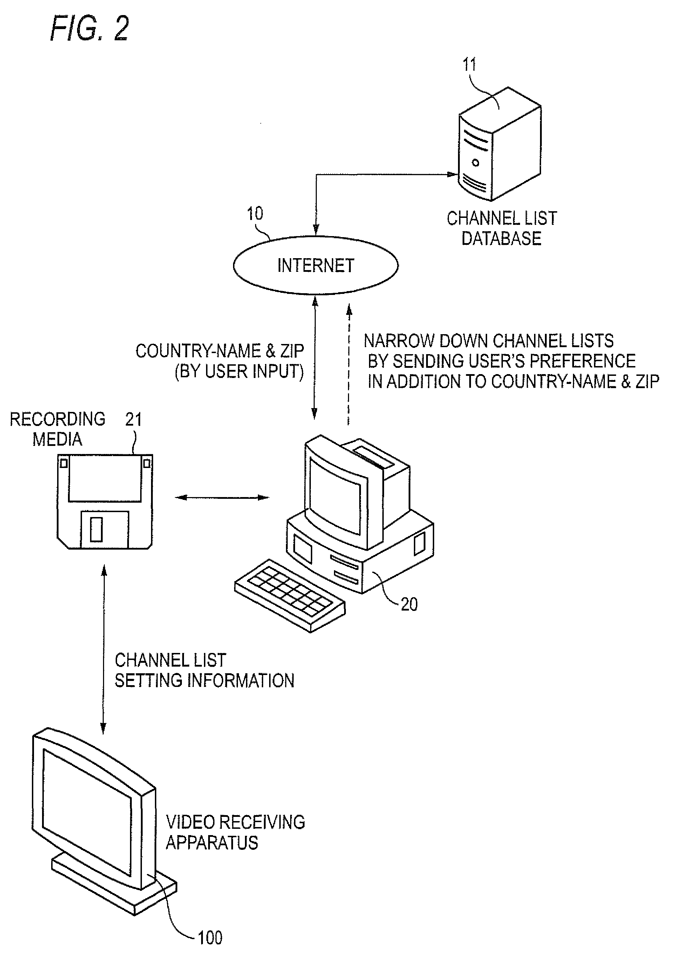

FIG. 2 illustrates a configuration in which the video receiving apparatus is not directly connected to the Internet 10, and in which a personal computer (PC) 20 accesses the channel list database via the Internet 10. In this case, generated channel list setting information is input from the PC 20 to video receiving apparatus using a storage media 21.

Recording media illustrated in FIG. 2 is indicated by the illustration of a floppy (registered trademark). However, other recording-media can be used. The apparatus can be set such that recording media (a universal serial bus (USB) memory, an optical disc 1001, or the like) is appropriately selected.

FIG. 3 illustrates an example of each of user information used to generate channel list setting information according to the embodiment, and a user interface used when the preference of a user is input.

As illustrated in a section (a) of FIG. 3, a prompt for selecting the name of a country is displayed on the screen of a monitor 3001. The section (a) of FIG. 3 illustrates a state in which the country name "GERMANY" is focused. The country name "GERMANY" is selected pushing a movement button and a decision button of each of a key operation input unit 82 and the remote control. A section (b) of FIG. 3 illustrates another example of a screen display to be displayed subsequently to the selection of the country name. That is, a prompt for inputting a zip-code is displayed on the screen of the monitor 3001. A zip code is input, pushing numerical buttons and the channel button of the key operation input unit 82 and the remote control. For example, a five-digit number is input in the case of "GERMANY".

A prompt for inputting the category of a user's choice is displayed on the screen of the monitor 3001, as illustrated in a section (c) of FIG. 3, subsequently to the input of the zip code. The section (c) of FIG. 3 illustrates a state in which the category "COMEDY" is focused. The category "COMMEDY" is selected pushing the movement button and the decision button of each of the key operation input unit 82 and the remote control. Next, a section (d) of FIG. 3 illustrates a screen for inputting an upper limit to the number of channels that can be listed in a channel list. The upper limit to the number of channels is input pushing the numerical buttons and the channel button of the key operation input unit 82 and the remote control. In this example, a value of "25" is input. After that, the input of the information is ended pushing the decision button.

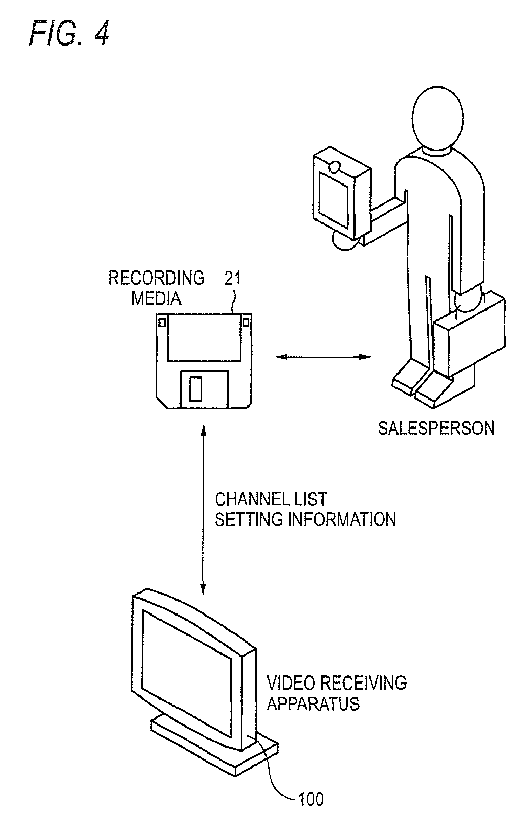

FIG. 4 is a diagram illustrating an example of utilizing the invention in a mode similar to that illustrated in FIG. 2. Particularly, FIG. 4 illustrates that even when a user cannot access directly to the Internet, a channel list can be supplied to the user via storage media 21 by allowing another person (e.g., a salesperson) to preliminarily ask for the user's desire and acquire the setting information.

The salesperson asking for the user' s desire can perform setting of the video receiving apparatus using recording media. In addition, even when the salesperson doesn't visit the user, the user can tell an operator the user's desire by telephone, so that recording media can be mailed to the user.

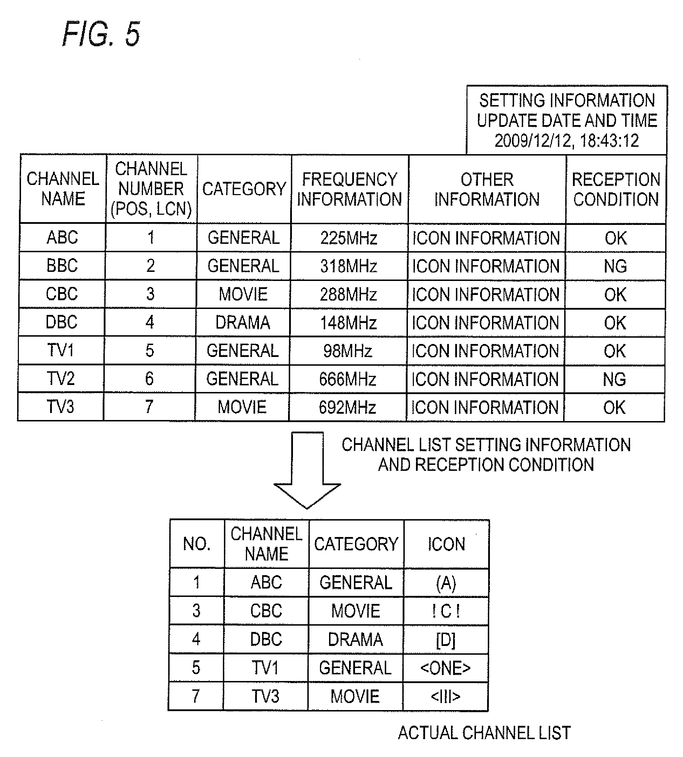

FIG. 5 illustrates how a channel list to be finally used by a user is generated by checking an actual electric wave condition, based on channel list setting information generated from the database.

Among seven channels indicated by the channel list setting information, all of five channels whose wave condition (reception condition) is OK are included in the channel list.

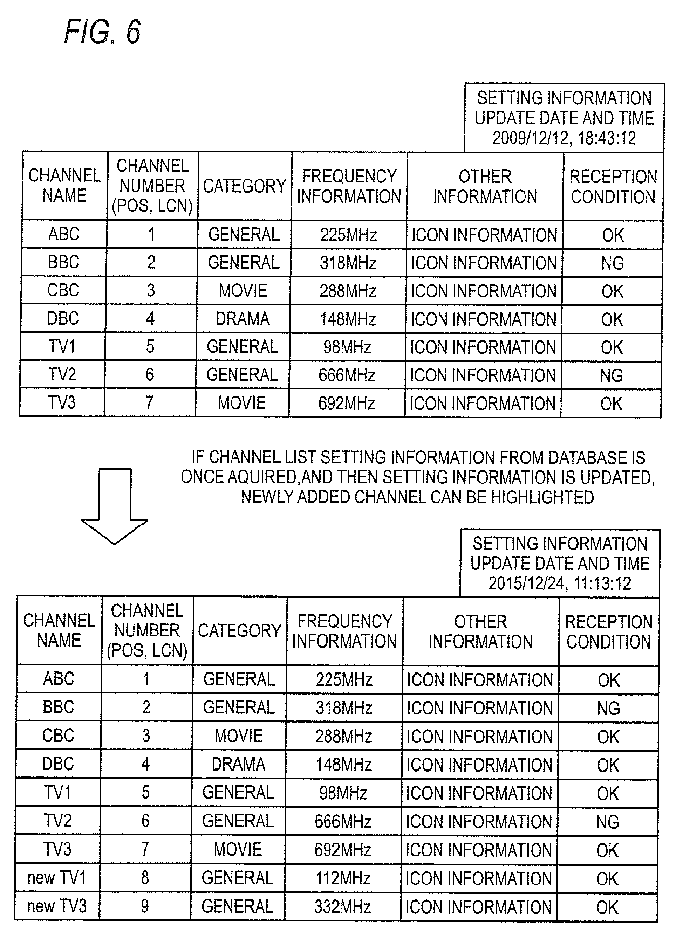

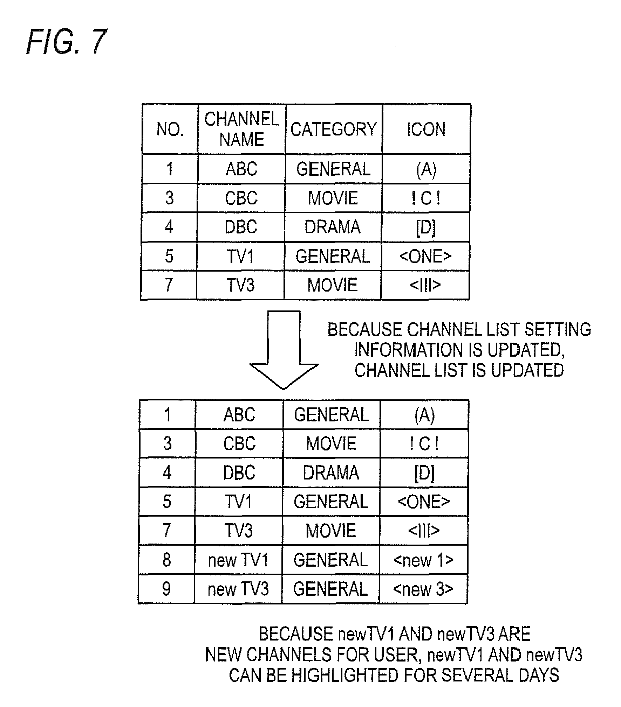

FIGS. 6 and 7 illustrate embodiments in the case that new channels are added when a user first utilizes the embodiments, sets a channel list and updates channel list setting information again about 6 years later. If the new channels are present, highlighting of the new channels can be performed to inform the user of the presence of the new channels. (A time-period in which the highlighting is performed can be several days, and alternatively, a user can be caused to instruct to stop the highlighting.)

In the illustrated examples, two channels newTV1 and newTV3 are added.

The embodiments are featured in the following respects.

Time taken by the embodiments to generate a channel list is less than that taken by executing AutoScan. (The embodiments execute, so to speak, Virtual AutoScan.).

Hitherto, a user performs a troublesome operation of setting a list from a huge number of channels utilizing a user interface using components in a receiving apparatus, and a remote control. However, according to the invention, the generation of a channel list can easily be achieved by means for utilizing the Internet, accessing a database, and generating channel list setting information.

Information on Channels, which cannot be acquired from broadcast waves, can be acquired according to the invention.

To summarize the foregoing description, the video receiving apparatus according to the invention sends, to a database via the Internet, a user's input information representing a place at which the video receiving apparatus is used. The database generates channel list setting information from the input information and sends back the generated channel list setting information to the user. The video receiving apparatus scans broadcast waves by setting, from the channel list setting information sent back thereto, a channel list used by the video receiving apparatus, as the following video receiving apparatuses and embodiments set.

According to one embodiment of the invention, a video receiving apparatus featured in the following respects. That is, a user transmits, to a channel list setting information purveyor, information (e.g., a zip code or the like) representing a place at which the apparatus is used. The channel list setting information purveyor generates from the input information channel list setting information and sends back the generated channel list setting information to the user. The channel list setting information includes information on a method of modulating broadcast waves representing programs viewable by the video receiving apparatus, information on the frequency band and the center frequency of the broadcast waves, and other types of information. Thus, the broadcast waves can be scanned in a pinpointing manner. The video receiving apparatus can receive the sent-back channel list setting information as input information, and set the channel list.

According to another embodiment of the invention, a video receiving apparatus featured in the following respects. The video receiving apparatus sends, to a database via the Internet, a user's input information on a place at which the video receiving apparatus is used, and the like. The database generates channel list setting information from the input information and sends back to the video receiving apparatus the generated channel list setting information. The video receiving apparatus sets from the sent-back channel list setting information a channel list used therein.

According to still another embodiment of the invention, a video receiving apparatus featured in the following respect. A channel list setting information purveyor notifies a user of information on increase or reduction in the number of channels.

According to still another embodiment of the invention, a video receiving apparatus featured in the following respect. Channel list setting information stored in the video receiving apparatus reflects the latest information.

According to still another embodiment of the invention, a video receiving apparatus featured in the following respect . If the number of channels is huge when the information to be sent to a database is only information (e.g., a zip code) on a place at which the video receiving apparatus is used, information on a user' s preference can be sent to the database to narrow down channels by eliminating, from candidates, a channel doesn't suit the preference of the user.

As one of embodiments, the video receiving apparatus acquires channel list setting information from a database before executing AutoTuning. After that, the video receiving apparatus tries to receiving an actual program. A channel list for a television apparatus used by a user is set to include only channels corresponding to programs actually received by the video receiving apparatus. (This processing is referred to as Virtual AutoScan.)

According to still another embodiment of the invention, a video receiving apparatus can be configured as follows. That is, the video receiving apparatus and the Internet are not directly connected to each other. Exchange of channel list setting information can be performed as follows, using recording-media. That is, a PC accesses a database and copies channel list setting information therefrom onto the recording media. The channel list setting information is input from the recording media to the video receiving apparatus. In this case, the PC can take over a part or all of a channel list generation process performed in the database. (When the PC performs the channel list generation process, the apparatus is devised such that the PC always uses the latest channel list setting information by communicating with the database to check whether the channel list setting information is the latest information.)

According to still another embodiment of the invention, a video receiving apparatus can be configured as follows. That is, when a channel list is once generated utilizing a database and updated using the database, the video receiving apparatus notifies a server of the last list generation date and time. If a new channel exists, information for highlighting the new channel is added to the channel list setting information.

That is, according to the present embodiment, a channel list of actually available channels is generated by narrowing down channels and checking whether the video receiving apparatus can actually receive a program from each channel. The present embodiment can provide a user interface easy to use, as an advantage of the invention.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A video receiving apparatus comprising:
a transmitter configured to transmit place information input by a user to an external server;
a receiver configured to receive channel list setting information based on the place information from the external server;
a scanner configured to scan receivable channels among channels represented by the channel list setting information; and
a listing unit configured to list information representing the receivable channels into a channel list.

2. The video receiving apparatus according to claim 1, wherein:
the transmitter transmits preference information input by the user with the place information to the external server.

3. The video receiving apparatus according to claim 1, wherein:
the transmitter transmits a maximum number of channels in the channel list input by the user with the place information to the external server.

4. A video receiving apparatus comprising:
an input unit configured to input channel list setting information based on place information designated by a user;
a scanner configured to scan receivable channels among channels represented by the channel list setting information; and
a listing unit configured to list information representing the receivable channels into a channel list.

5. The video receiving apparatus according to claim 1 or 4, further comprising:
a display unit configured to display the channel list.

6. A video receiving method comprising:
transmitting place information input by a user to an external server;
receiving channel list setting information based on the place information from the external server,;
scanning receivable channels among channels represented by the channel list setting information; and
listing information representing the receivable channels into a channel list.
